# EUROPEAN PATENT SPECIFICATION

(11) **EP 1 102 985 B1**
(45) Date of publication and mention of the grant of the patent: **26.10.2005**
(21) Application number: 99936210.6
(22) Date of filing: 05.08.1999
(51) Int. Cl.: G01N 27/64, H01J 49/04, H01J 49/42, B01D 59/48

(54) **METHOD FOR SEPARATION AND ENRICHMENT OF ISOTOPES IN GASEOUS PHASE**
VERFAHREN ZUR ISOTOPENTRENNUNG UND ISOTOPENANREICHERUNG IN DER GASPHASE
PROCEDE DE SEPARATION ET D'ENRICHISSEMENT DES ISOTOPES EN PHASE GAZEUSE

(30) Priority: 05.08.1998 US 95481 P; 29.01.1999 CA 2260572; 28.05.1999 US 321820
(43) Date of publication of application: 30.05.2001
(73) Proprietor: NATIONAL RESEARCH COUNCIL OF CANADA, Ottawa, Ontario K1A OR6 (CA)
(72) Inventor: GUEVREMONT, Roger, Gloucester, Ontario K1J 7W9 (CA); PURVES, Randy, W., Gloucester, Ontario K1C 2M1 (CA); BARNETT, David, Orleans, Ontario K1C 5G6 (CA)
(74) Representative: Frei, Alexandra Sarah
(86) International application number: PCT/CA1999/000716
(87) International publication number: WO 2000/008456

(56) References cited:
- US-A- 5 420 424
- GUEVREMONT R ET AL: "High field asymmetric waveform ion mobility spectrometry-mass spectrometry: an investigation of leucine enkephalin ions produced by electrospray ionization" JOURNAL OF THE AMERICAN SOCIETY FOR MASS SPECTROMETRY,US,ELSEVIER SCIENCE INC., NEW YORK, NY, vol. 10, no. 6, page 492-501 XP004173039 ISSN: 1044-0305
- HUDGINS R R ET AL: "High resolution ion mobility measurements for gas phase proteins: correlation between solution phase and gas phase conformations" INTERNATIONAL JOURNAL OF MASS SPECTROMETRY AND ION PROCESSES,NL,ELSEVIER SCIENTIFIC PUBLISHING CO. AMSTERDAM, vol. 165-166, page 497-507 XP004103206 ISSN: 0168-1176
- RIEGNER ET AL: "Qualitative evaluation of field ion spectrometry for chemical warfare agent detection" PROCEEDINGS OF THE 45TH ASMS CONFERENCE ON MASS SPECTROMETRY AND ALLIED TOPICS , June 1997 (1997-06), pages 473a-473b, XP000865529 cited in the application
- BURYAKOV ET AL.: "A new method of separation of multi-atomic ions by mobility at atmospheric pressure using a high-frequency amplitude asymmetric strong electric field" INTERNATIONAL JOURNAL OF MASS SPECTROMETRY AND ION PROCESSES., vol. 128, 1993, pages 143-148, XP000865595 ELSEVIER SCIENTIFIC PUBLISHING CO. AMSTERDAM., NL ISSN: 0168-1176 cited in the application
- CARNAHAN B. ET AL.: "Field ion spectrometry - a new analytical technology for trace gas analysis" PROCEEDINGS OF THE 41ST ISA ANALYSIS DIVISION SYMPOSIUM , vol. 29, 21 - 24 April 1996, pages 85-94, XP000863733 cited in the application

## Description

### FIELD OF THE INVENTION

The present invention relates to a method for separating and enriching isotopes in gaseous phase based on the principle of high field asymmetric waveform ion mobility spectrometry.

### BACKGROUND OF THE INVENTION

High sensitivity and amenability to miniaturization for field-portable applications have helped to make ion mobility spectrometry an important technique for the detection of many compounds, including narcotics, explosives, and chemical warfare agents (see, for example, G. Eiceman and Z. Karpas, *Ion Mobility Spectrometry* (CRC. Boca Raton, FL. 1994); and *Plasma Chromatography,* edited by T.W. Carr (Plenum, New York, 1984)). In ion mobility spectrometry, gas-phase ion mobilities are determined using a drift tube with a constant electric field. Ions are gated into the drift tube and are subsequently separated based upon differences in their drift velocity. The ion drift velocity is proportional to the electric field strength at low electric fields (e.g., 200 V/cm) and the mobility, K, which is determined from experimentation, is independent of the applied field. At high electric fields (e.g. 5000 or 10000 V/cm), the ion drift velocity may no longer be directly proportional to the applied field, and K becomes dependent upon the applied electric field (see G. Eiceman and Z. Karpas, *Ion Mobility Spectrometry* (CRC. Boca Raton, FL. 1994); and E.A. Mason and E.W. McDaniel, *Transport Properties of Ions in Gases* (Wiley, New York, 1988)). At high electric fields, K is better represented by Kₕ, a non-constant high field mobility term. The dependence of Kₕ on the applied electric field has been the basis for the development of high field asymmetric waveform ion mobility spectrometry (FAIMS), a term used by the inventors throughout this disclosure, and also referred to as transverse field compensation ion mobility spectrometry, or field ion spectrometry (see I. Buryakov, E. Krylov, E. Nazarov, and U. Rasulev, Int. J. Mass Spectrom. Ion Proc. 128. 143 (1993); D. Riegner, C. Harden, B. Carnahan, and S. Day, Proceedings of the 45th ASMS Conference on Mass Spectrometry and Allied Topics, Palm Springs, California, 1-5 June 1997, p. 473; B. Carnahan, S. Day, V. Kouznetsov, M. Matyjaszczyk, and A. Tarassov, Proceedings of the 41st ISA Analysis Division Symposium, Framingham, MA, 21-24 April 1996, p. 85; and B. Carnahan and A. Tarassov, U.S. Patent Number 5,420,424). Ions are separated in FAIMS on the basis of the difference in the mobility of an ion at high field Kₕ relative to its mobility at low field K. That is, the ions are separated because of the compound dependent behaviour of Kₕ as a function of the electric field. This offers a new tool for atmospheric pressure gas-phase ion studies since it is the change in ion mobility and not the absolute ion mobility that is being monitored.

An instrument based on the FAIMS concept has been designed and built by Mine Safety Appliances Company of Pittsburgh, Pa. ("MSA") for use in trace gas analysis. The MSA instrument is described in U.S. Patent No. 5,420,424 and is available under the trade mark FIS (for Field Ion Spectrometer). While the use of the MSA instrument (and similar instruments based on the FAIMS concept) for trace gas analysis is known, the inventors believe that they have identified certain heretofore unrealized properties of these instruments which make them more versatile. Based on this realization, the inventors have developed what is believed to be a previously unknown method for separation of isotopes of ions. A summary and detailed description of the present invention is provided below.

### SUMMARY OF THE INVENTION

The present invention provides a method for separating and enriching ions of different isotopic composition, comprising the steps of:
a) providing at least one ionization source of ions;
b) providing an analyzer region defined by a space between at least first and second spaced apart electrodes, said analyzer region being in communication with at least one of each of a gas inlet, a gas outlet, an ion inlet and an ion outlet, and introducing said ions into said analyzer region through said ion inlet;
c) applying an asymmetric waveform voltage and a direct current compensation voltage to at least one of said electrodes;
d) setting said asymmetric waveform voltage; and setting said direct current compensation voltage to a determined value to separate and enrich a desired isotopic ion.

Advantageously, the method is operable substantially at atmospheric pressure and substantially at room temperature.

The method may further include the step of detecting said transmitted ions by mass spectrometry.

Such transmitted ions may be subjected to a mass analysis scan to provide ion intensity data over a selected range of mass to charge ratios.

Typically, the method includes providing a gas flow through said analyzer region, so as to transport said ions along said analyzer region, although it will be understood that other ion transport means are possible.

Furthermore, in identifying a peak, it will be understood that the term peak is not limited to the apex of the peak, and that a peak will typically have a noticeable width, or a compensation voltage range in which the peak appears.

Finally, it will be understood that while mass spectrometry may be used for the purpose of compensation voltage scans, mass spectrometry is not necessary once the operating conditions have been determined. That is to say, isotopes separated and enriched by the above method may be collected for further processing.

### BRIEF DESCRIPTION OF THE DRAWINGS

For a better understanding of the present invention, and by way of example, reference will now be made to the accompanying drawings, which show preferred embodiments of the present invention in which:
Figure 1 shows three possible examples of changes in ion mobility as a function of the strength of an electric field;
Figure 2 illustrates the trajectory of an ion between two parallel plate electrodes under the influence of the electrical potential V(t);
Figures 3A and 3B show schematically an embodiment of a modified FAIMS device;
Figure 4 illustrates two opposite waveform modes which may be used with the apparatus of Figures 3A and 3B;
Figures 5A and 5B show schematically the coupling of the FAIMS apparatus of Figures 3A and 3B together with a mass spectrometer;
Figures 6A and 6B shows schematically a FAIMS apparatus for measuring the ion distribution in the analyzer region;
Figures 7 illustrates the high voltage, high frequency asymmetric waveform applied to the FAIMS apparatus shown in Figures 6A and 6B;
Figure 8 illustrates varying ion arrival time profiles at the innermost ion collector electrode of the FAIMS apparatus in Figures 6A and 6B;
Figure 9 shows a series of 16 ion selected compensation voltage (IS-CV) spectra for a sample solution containing ammonium chloride and EDTA at various DV values;
Figure 10A shows an expanded IS-CV spectrum of the sample solution used in Figure 9 at DV=0 volts;
Figure 10B shows a mass spectrum for the sample solution used in Figure 9 at DV=0 volts and CV=0 volts;
Figure 10C shows a table of the major ions in an electrospray ionization mass spectrometry (ESI-MS) spectrum for the sample solution used in Figure 9;
Figure 11A shows an IS-CV spectrum for the solution used in Figure 9 at DV=-2700 volts;
Figure 11B shows mass spectra for the solution used in Figure 9 at DV=-2700 volts and at various CV values;
Figure 12 shows an expanded IS-CV spectra of the solution used in Figure 9 at DV=-3300 volts; and
Figures 13A-13C show mass spectra of the solution used in Figure 9 at DV=-3300 volts and at various CV values.

### DETAILED DESCRIPTION OF THE INVENTION

As an important preliminary note, the discussion below generally uses the term "ion" to mean a charged atomic or molecular entity, the "ion" can be any electrically charged particle, solid, liquid or gas, of any size. The discussion below refers to both positively charged and negatively charged ions, and it will be understood by a person skilled in the art that, for any individual analysis, only one of these types of ions will be used.

The discussion below also generally uses the term "isotopes" to mean members of a chemical-element family that have two or more nuclides with the same number of protons but different numbers of neutrons, such that they differ in atomic mass but have the same chemical attributes.

The disclosure also uses the term "ion selected compensation voltage" (IS-CV) spectra which refers to scanning the compensation voltage applied to a FAIMS analyzer, as discussed below, typically while monitoring a single mass-to-charge (m/z) value. The term "total ion current compensation voltage" (TIC-CV) spectra is also used to refer to a compensation voltage scan which shows the sum of a signal for all detected ions in a given m/z range.

### Principles of FAIMS

The principles of operation of FAIMS have been described in Buryakov *et. al.* (see I. Buryakov, E. Krylov, E. Nazarov, and U. Rasulev, Int. J. Mass Spectrom. Ion Proc. 128. 143 (1993)) and are summarized here briefly. The mobility of a given ion under the influence of an electric field can be expressed by: Kₕ(E) = K(1+f(E)), where Kₕ is the mobility of an ion at high field, K is the coefficient of ion mobility at low electric field and "f(E)" describes the functional dependence of the ion mobility on the electric field (see E.A. Mason and E.W. McDaniel, *Transport Properties of Ions in Gases* (Wiley, New York, 1988); and I. Buryakov, E. Krylov, E. Nazarov, and U. Rasulev, Int. J. Mass Spectrom. Ion Proc. 128. 143 (1993)).

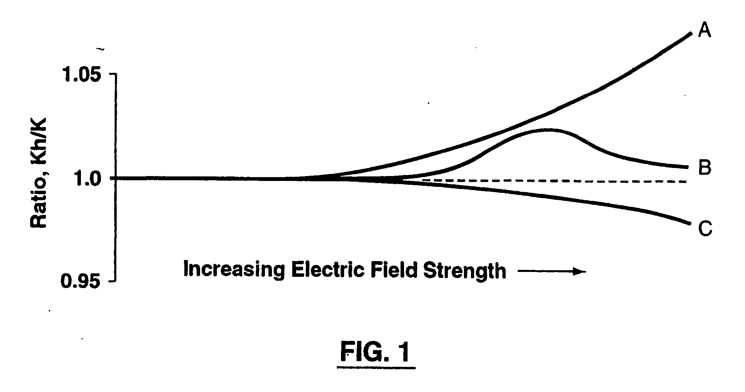

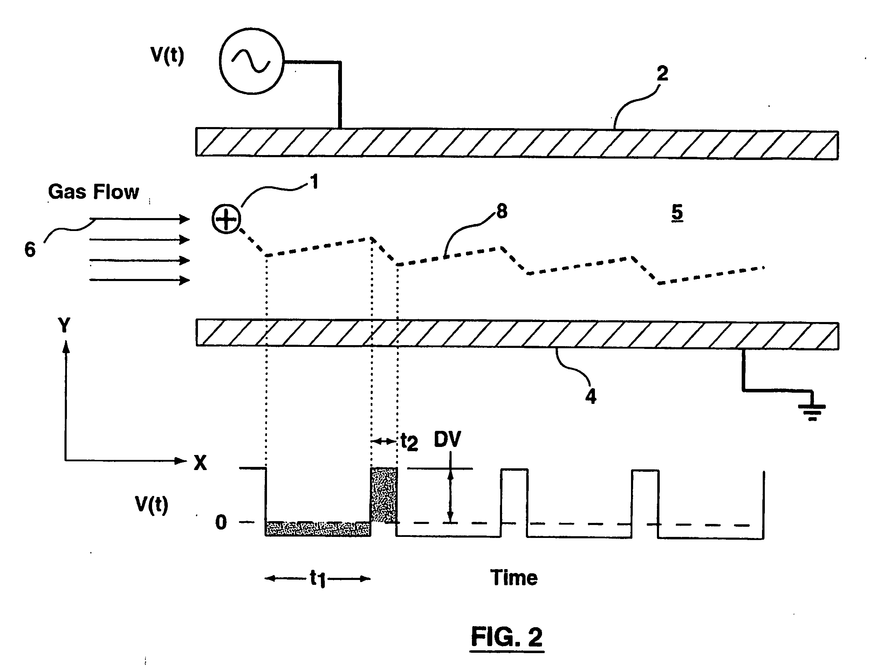

Referring to Figure 1, three examples of changes in ion mobility as a function of the strength of an electric field are shown: the mobility of type A ions increases with increasing electric field strength; the mobility of type C ions decreases; and the mobility of type B ions increases initially before decreasing at yet higher fields. The separation of ions in FAIMS is based upon these changes in mobility at high electric fields. Consider an ion 1, for example a type A ion shown in Figure 1, that is being carried by a gas stream 6 between two spaced apart parallel plate electrodes 2, 4 as shown in Figure 2. The space between the plates 2, 4 defines an analyzer region 5 in which the separation of ions may take place. The net motion of the ion 1 between the plates 2, 4 is the sum of a horizontal x-axis component due to a flowing stream of gas 6 and a transverse y-axis component due to the electric field between the plates 2, 4. (The term "net" motion refers to the overall translation that the ion 1 experiences, even when this translational motion has a more rapid oscillation superimposed upon it.) One of the plates is maintained at ground potential (here, the lower plate 4) while the other (here, the upper plate 2) has an asymmetric waveform, V(t), applied to it. The asymmetric waveform V(t) is composed of a high voltage component, V₁, lasting for a short period of time t₂ and a lower voltage component, V₂, of opposite polarity, lasting a longer period of time t₁. The waveform is synthesized such that the integrated voltage-time product (thus the field-time product) applied to the plate during a complete cycle of the waveform is zero (i.e., V₁ t₂ + V₂ t₁ = 0 ); for example +2000 V for 10 µs followed by -1000 V for 20 µs. Figure 2 illustrates the ion trajectory 8 (as a dashed line) for a portion of the waveform shown as V(t). The peak voltage during the shorter, high voltage portion of the waveform will be called the "dispersion voltage" or DV in this disclosure. During the high voltage portion of the waveform, the electric field will cause the ion 1 to move with a transverse velocity component v₁ = KₕE_{high}, where E_{high} is the applied field, and Kₕ is the high field mobility under ambient electric field, pressure and temperature conditions. The distance travelled will be d₁ = v₁t₂ = KₕE_{high}t₂, where t₂ is the time period of the applied high voltage. During the longer duration, opposite polarity, low voltage portion of the waveform, the velocity component of the ion will be v₂ = KE_{low}, where K is the low field ion mobility under ambient pressure and temperature conditions. The distance travelled is d₂ = v₂t₁ = KE_{low}t₁. Since the asymmetric waveform ensures that (V₁ t₂) + (V₂ t₁) = 0, the field-time products E_{high}t₂ and E_{low}t₁ are equal in magnitude. Thus, if Kₕ and K are identical, d₁ and d₂ are equal, and the ion 1 will be returned to its original position along the y-axis during the negative cycle of the waveform (as would be expected if both portions of the waveform were low voltage). If at E_{high} the mobility Kₕ > K, the ion 1 will experience a net displacement from its original position relative to the y-axis. For example, positive ions of the type A shown in Figure 1 will travel further during the positive portion of the waveform (i.e., d₁ > d₂) and the type A ion 1 will migrate away from the upper plate 2 (as illustrated by the dashed line 8 in Figure 2). Similarly, ions of type C will migrate towards the upper plate 2.

If an ion of type A is migrating away from the upper plate 2, a constant negative dc voltage can be applied to this plate 2 to reverse, or "compensate" for this transverse drift. This dc voltage, called the "compensation voltage" or CV in this disclosure, prevents the ion 1 from migrating towards either plate 2, 4. If ions derived from two compounds respond differently to the applied high electric fields, the ratio of Kₕ to K may be different for each compound. Consequently, the magnitude of the compensation voltage CV necessary to prevent the drift of the ion toward either plate 2, 4 may also be different for each compound. Under conditions in which the compensation voltage CV is appropriate for transmission of one compound, the other will drift towards one of the plates 2, 4 and subsequently be lost. The speed at which the compound will move to the wall of the plates 2, 4 depends on the degree to which its high field mobility properties differ from those of the compound that will be allowed to pass under the selected condition. A FAIMS instrument or apparatus is an ion filter capable of selective transmission of only those ions with the appropriate ratio of Kₕ to K.

The term FAIMS, as used in this disclosure, refers to any device which can separate ions via the above described mechanism, whether or not the device has focussing or trapping behaviour.

### Improvements to FAIMS

The FAIMS concept was first shown by Buryakov *et. al.* using flat plates as described above. Later, Carnahan *et. al.* improved the sensor design by replacing the flat plates used to separate the ions with concentric cylinders (see B. Carnahan, S. Day, V. Kouznetsov, M. Matyjaszczyk, and A. Tarassov, Proceedings of the 41st ISA Analysis Division Symposium, Framingham, MA, 21-24 April 1996, p. 85; U.S. Patent No. 5,420,424 issued to Carnahan et al.). The concentric cylinder design has several advantages including higher sensitivity than the flat plate configuration (see R.W. Purves, R. Guevremont, S. Day, C.W. Pipich, and M.S. Matyjaszczyk, Rev. Sci. Instrum., 69, 4094 (1998)).

As mentioned earlier, an instrument based on the FAIMS concept has been built by Mine Safety Appliances Company (MSA). The MSA instrument uses the concentric cylinder design and is described further below. (For the purposes of this disclosure, the MSA instrument is referred to as FAIMS-E, where E refers to an electrometer or electric current detection device.)

One previous limitation of the cylindrical FAIMS technology (see D. Riegner, C. Harden, B. Carnahan, and S. Day, Proceedings of the 45th ASMS Conference on Mass Spectrometry and Allied Topics, Palm Springs, California, 1-5 June 1997, p. 473; and B. Carnahan, S. Day, V. Kouznetsov, M. Matyjaszczyk, and A. Tarassov, Proceedings of the 41st ISA Analysis Division Symposium, Framingham, MA, 21-24 April 1996, p. 85) was that the identity of the peaks appearing in the FAIMS-E CV spectra could not be unambiguously confirmed due to the unpredictable changes in Kₕ at high electric fields.

Thus, one way to extend the capability of instruments based on the FAIMS concept, such as the FAIMS-E instrument, is to provide a way to determine the make-up of the FAIMS-E CV spectra more accurately, for example, by introducing ions from the FAIMS-E device into a mass spectrometer for mass-to-charge (m/z) analysis.

In addition, it has been found that a modified FAIMS instrument, or any similar instrument, can be used in a new method of separating isotopes of gaseous phase ions. The present invention is directed to a new method of separating isotopes of ions and illustrates the method by an example. Details of the method of the present invention are described below.

### Electrospray Ionization

ESI is one of several related techniques that involves the transfer of ions (which can be either positively or negatively charged) from liquid phase into the gas-phase. Kebarle has described four major processes that occur in electrospray ionization (intended for use in mass spectrometry): (1) production of charged droplets, (2) shrinkage of charged droplets by evaporation, (3) droplet disintegration (fission), and (4) formation of gas-phase ions (Kebarle, P. and Tang, L. *Analytical Chemistry,* 65 (1993) pp. 972A-986A). In ESI, a liquid solution (e.g. 50/50 w/w water/methanol) is passed through a metal capillary (e.g., 200 µm outer diameter and 100 µm ID) which is maintained at a high voltage to generate the charged droplets, say +2000 V (50 nA) for example. The liquid samples can be pumped through at, say, 1µL/min. The high voltage creates a very strong, non-constant electric field at the exit end of the capillary, which nebulizes the liquid exiting from the capillary into small charged droplets and electrically charged ions by mechanisms described by Kebarle and many others. Several related methods also exist for creating gas-phase ions from solution phase. Some examples of these methods include ionspray, which uses mechanical energy from a high velocity gas to assist in nebulization; thermospray, which applies heat instead of a voltage to the capillary; and nanospray, which uses small ID capillaries. In this disclosure, the term ESI is used to encompass any technique that creates gas-phase ions from solution.

### Modified FAIMS-E

As a first step, the FAIMS-E device designed and built by Mine Safety Appliances Company was modified to permit the introduction of ions using ESI. The inventors believe that the coupling of an ESI source together with a FAIMS-E device is not obvious as it is known that ions produced by ESI have a high degree of solvation, and that a FAIMS-E device may not function properly when exposed to high levels of solvent vapour. The inventors have developed various practical embodiments of an apparatus that combines an ESI source together with a FAIMS device to show that such coupling is possible.

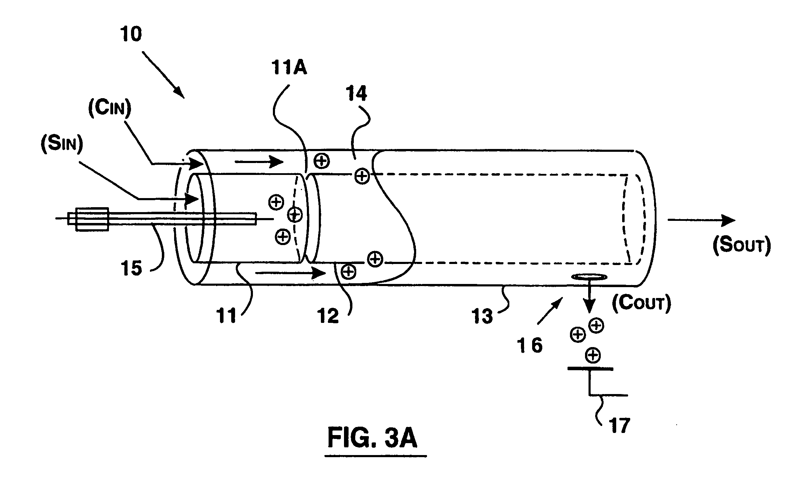

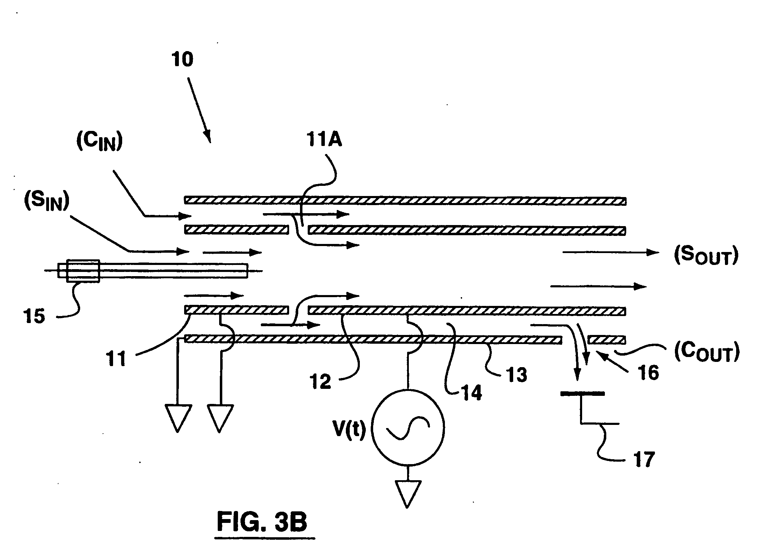

One example is the modified FAIMS-E device 10 shown schematically in 3-dimensional view in Figure 3A and in cross section in Figure 3B. The FAIMS-E apparatus 10 is composed of two short inner cylinders or tubes 11, 12 which are axially aligned and positioned about 5 mm apart, and a long outer cylinder 13 which surrounds the two inner cylinders 11, 12. The inner cylinders 11, 12 (12 mm inner diameter, 14 mm outer diameter), are about 30 mm and 90 mm long, respectively, while the outer cylinder 13 (18 mm inner diameter, 20 mm outer diameter) is about 125 mm long. Ion separation takes place in the 2 mm annular space of FAIMS analyzer region 14 between the long inner cylinder 12 and the outer cylinder 13. To produce ions using electrospray ionization (ESI), for introduction into the FAIMS analyzer region 14 of the FAIMS device, the metal capillary of the ESI needle 15 was placed along the central axis of the shorter inner cylinder 11, terminating about 5 mm short of the gap or ion inlet between the two inner cylinders 11, 12. The positioning of the ESI needle 15 shown in Figures 3(A) and 3(B) differs from the positioning of the ionization source found in the MSA FAIMS-E device in that the ESI needle 15 does not extend through the long inner cylinder 12 to which the asymmetric waveform V(t) is typically applied. By introducing the ESI needle 15 from the opposite end of the FAIMS-E, i.e. through the short inner cylinder 11, and not positioning the tip of the ESI needle 15 too close to the long inner cylinder 12, the performance of the ESI needle 15 is not compromised by the asymmetric waveform V(t), which would be the case if the ESI needle 15 was positioned within the long inner cylinder 12 (as disclosed in U.S. Patent No. 5,420,424).

As explained above, the FAIMS-E device 10 can be considered as an ion "filter", with the capability of selectively transmitting one type of ion out of a mixture. If a mixture of ions is presented continuously to the entrance of the FAIMS analyzer region 14, for example by an ESI needle 15, and the ions are carried along the length of the analyzer 14 by a flowing gas under conditions in which no voltages are applied to either the inner cylinder 12 or outer cylinder 13 (i.e. the electrodes are grounded), some finite level of transmission for every ion is expected, albeit without any separation.

It might be expected that the detected current of any selected ion in this mixture should never exceed the current for that ion when it is transmitted through the device 10 in the no-voltages condition. It might also be expected that application of high voltages (i.e. application of transverse fields, perpendicular to the gas flows) designed to yield ion separation should not increase the ion transmission, but should decrease transmission through collisions with the walls of the cylinders 12, 13. That is, the asymmetric waveform might effectively narrow the "width" of the FAIMS analyzer region 14, and therefore should decrease the ion transmission. However, contrary to this prediction, experiments conducted by the inventors and described in this disclosure have shown that the sensitivity of ion detection in the cylindrical geometry FAIMS-E 10 increases as the voltage amplitude of the asymmetric waveform V(t) is increased. As will be explained below, these unusual observations suggest that atmospheric pressure ion focussing is occurring in the FAIMS analyzer region 14.

Still referring to Figures 3A and 3B, four gas connections to the FAIMS-E apparatus 10 are shown. Compressed gas (e.g. air or nitrogen) is passed through a charcoal/molecular sieve gas purification cylinder (not shown) into the FAIMS-E 10 through carrier in (Cᵢₙ) and/or sample in (Sᵢₙ) ports. The gas exits the FAIMS-E 10 via the carrier out (Cₒᵤₜ) and/or sample out (Sₒᵤₜ) ports. All four gas flow rates can be adjusted. Non-volatile analytes are typically introduced into the FAIMS-E 10 using an ESI needle 15. Alternatively, volatile analytes may be introduced into the FAIMS-E 10 through the Sᵢₙ line, and a portion may be ionized as the compound(s) pass by a corona discharge needle.

Still referring to Figures 3A and 3B, the outer cylinder 13 of the FAIMS-E apparatus 10, and the shorter inner cylinder 11, are typically held at an adjustable electrical potential (V_{FAIMS}). V_{FAIMS} is usually ground potential in FAIMS-E. During operation, a high frequency high voltage asymmetric waveform is applied to the long inner cylinder 12 to establish the electric fields between the inner and outer cylinders 12,13. In addition to this high frequency (e.g., 210 kHz) high voltage waveform a dc offset voltage (i.e. the compensation voltage CV added to FAIMS) is applied to the long inner cylinder 12. This leads to the separation of ions in the FAIMS analyzer region 14 in the manner discussed earlier.

Still referring to Figures 3A and 3B, some of the ions produced by the ionization source are carried by the gas stream along the length of the annular space between the outer cylinder 13 and the long inner cylinder 12, also referred to as the FAIMS analyzer region 14. If the combination of DV and CV are appropriate, and the ion is not lost to the tube walls, a series of openings or ion outlets 16 near the downstream end of the outer cylinder 13 allow the ions to be extracted to an electrical current detector 17 which is biased to about -100 V. (Note that here the carrier gas also exits from the ion outlet 16.)

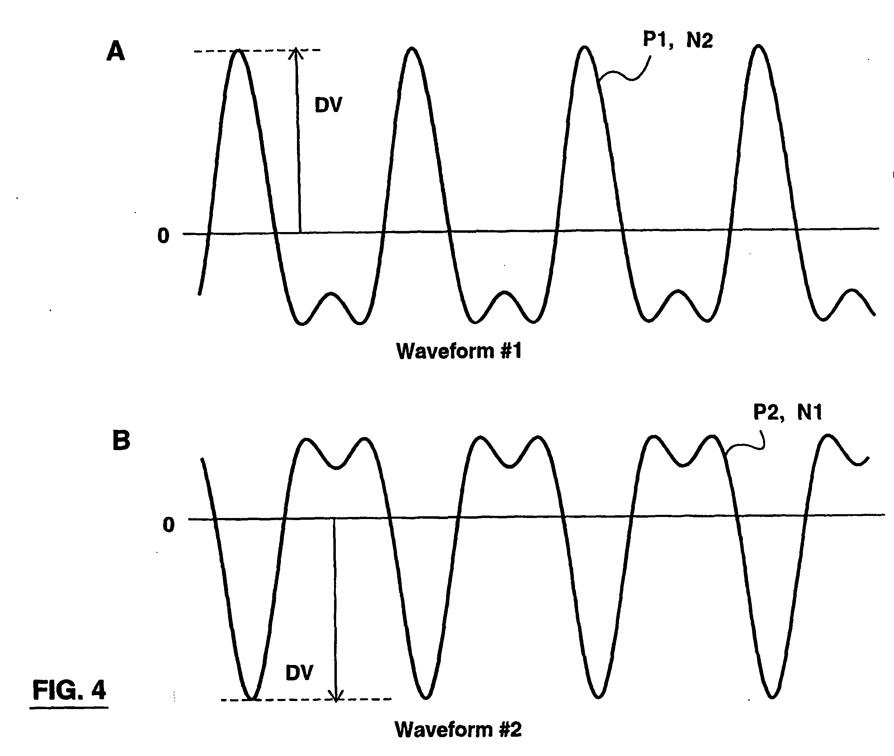

In practice, the simplified square wave version of V(t) shown in Figure 2 cannot be used because of the electrical power demands that such a wave would place on the waveform generator. The actual waveforms V(t) appear in Figure 4. These waveforms are produced by the electronic addition of a sine wave and its harmonic of twice the frequency. As shown in Figure 4, the FAIMS-E apparatus 10 operates using one of the two waveform modes (with the waveform applied to the inner cylinder). These reversed polarity waveform modes do not yield "reversed polarity" CV spectra as might be expected. This is because the reversal of polarity in this manner also creates a mirror image effect of the ion focussing behaviour of FAIMS. The result of such polarity reversal is that the ions are not focussed, but rather collide with the walls of the cylinders 12, 13. The mirror image of a focussing valley is a hill-shaped potential surface. (This characteristic, and the various "modes" of operation of FAIMS, is discussed further below.)

### FAIMS-MS

As discussed earlier, one way to extend the functionality of FAIMS devices is to couple them together with a mass spectrometer. The use of a mass spectrometer together with a FAIMS device is advantageous because the mass spectrometer facilitates a mass-to-charge (m/z) analysis to determine the make-up of CV spectra more accurately. One possible FAIMS-MS embodiment is described here.

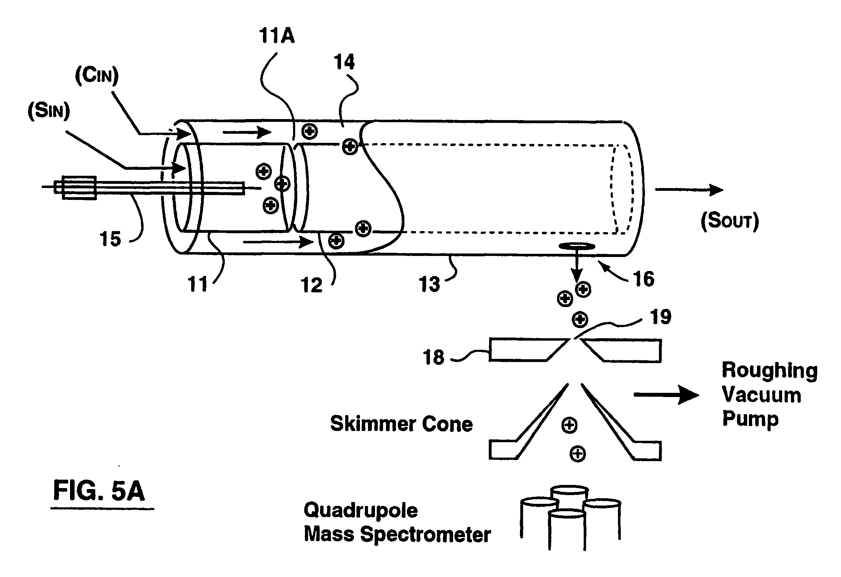

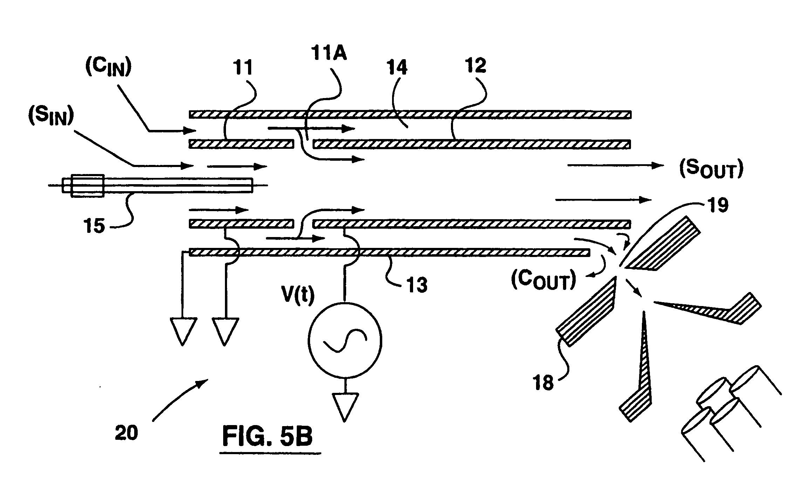

Referring to Figures 5A and 5B, the coupling of FAIMS and a mass spectrometer (FAIMS-MS 20) is shown schematically. The FAIMS-MS 20 of Figures 5A and 5B, and the FAIMS-E 10 shown in Figures 3A and 3B, differ significantly only at the detection end of the instrument. In accordance with the invention, the electrometer 17 has been replaced by a sampler cone 18, placed at the end of the FAIMS cylinders 12,13 as is shown in a simplified form in Figure 5B. The diameter of the orifice 19 in the sampler cone 18 is approximately 250 µm. The gas flows in the FAIMS-MS 20 are analogous to those in the FAIMS-E 10 except that the Cₒᵤₜ is divided into two components, namely the original Cₒᵤₜ and the flow through the orifice 19 into the mass spectrometer. The electrical waveforms applied to the long inner cylinder 12 are identical to those used in the FAIMS-E apparatus 10. The sampler cone 18 may be electrically insulated from the other components so a separate voltage OR can be applied to it. Furthermore, a voltage can be applied to the cylinders of the entire FAIMS unit (V_{FAIMS}) for the purpose of enhancing the sensitivity of the FAIMS-MS.

Figure 5B shows the FAIMS cylinders 12, 13 at a 45 degree angle in relation to the sampler cone 18 of the mass spectrometer. Figure 5A showed the FAIMS cylinders 12, 13 at a 90 degree angle in relation to the sampler cone 18. The way (i.e., the angle between the two tubes of the FAIMS and the sampler cone 18) in which the ions are extracted from the cylinders 12, 13 of the FAIMS-MS 20 into the mass spectrometer is not limited to these angles. Furthermore, the location in which the ions are extracted from the two tubes can also be changed. That is, the ions can be extracted anywhere along the separation region of the FAIMS.

### Ion Focussing

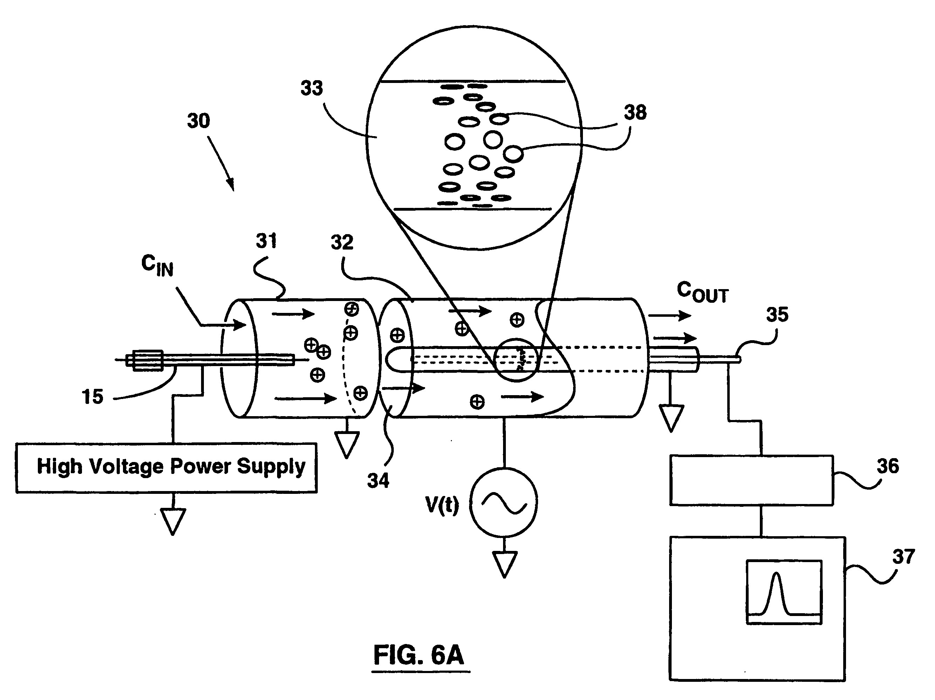

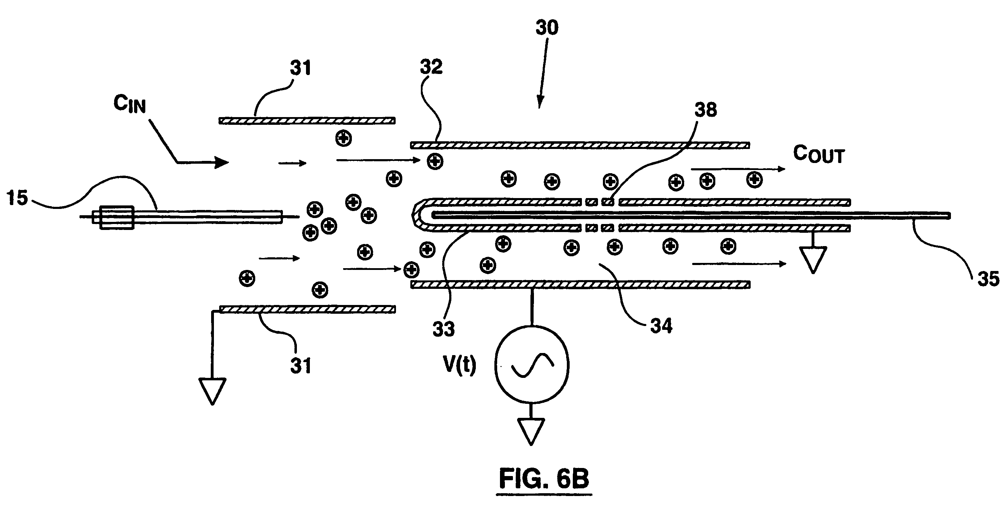

Referring now to Figures 6A and 6B, to demonstrate the focussing effect referred to above, a special FAIMS instrument was designed by the inventors and constructed to measure the ion distribution between the two cylinders (outer and inner cylinders) of a FAIMS device. This instrument will be referred to in this disclosure as the FAIMS-R1-prototype 30 and is illustrated schematically in Figures 6A and 6B. Ions were generated inside of an electrically grounded cylinder 31 approximately 35 mm long and 20 mm i.d.. The tip of an ionization needle 15 was typically located near the center of this tube, and at least 15 mm from the end of the FAIMS analyzer region 34. The FAIMS analyzer region 34 in this embodiment is composed of an outer tube 32 which is 70 mm long and 6 mm i.d., and which surrounds a 2 mm o.d. inner shield electrode 33. The inner shield electrode 33 is an electrically grounded stainless steel tube which is closed at the end that faces the ionization needle 15. This inner electrode 33 surrounds, and shields, an electrically isolated conductor 35 passing into its center. This innermost conductor 35 (i.e the ion collector electrode) is a collector for ions, and is connected to a fast current amplifier or electrometer 36 (e.g. Keithly model 428) and a digital storage oscilloscope 37 (e.g. LeCroy model 9450).

In the system shown in Figures 6A and 6B, the ions which surround the inner electrode 33 are forced inwards by a pulsed voltage. These ions travel from the FAIMS analyzer region 34 to the innermost conductor 35 through a series of 50 µm holes 38 drilled through the inner shield electrode 33. The holes drilled in the inner shield electrode 33 are positioned about 2 cm from the end facing the ionization needle 15, and are spaced about 0.5 mm apart for a distance of 10 mm on one side of the inner shield electrode 33. The holes 38 drilled in the inner shield electrode 33 are located in this manner to minimize the variability in distance between the inner shield electrode 33 and the outer cylinder 32 in the vicinity of these holes 38. It was the inventors' objective to measure the ion abundance radial profiles of the ions located in the annular space (i.e. the FAIMS analyzer region 34) between the inner shield electrode 33 and the outer electrode 32 by pulsing the ions toward the inner shield electrode 33 and through the holes 38 and against the innermost ion collector electrode 35. The time-dependent distribution of ions arriving at the innermost conductor 35 is related to the physical radial distribution of ions around the inner electrode 33. Excessive variation in the distance between the two cylinders 32, 33 would have increased the uncertainty of the ion arrival times at the innermost conductor 35, thus decreasing the spatial resolution of the measurements made with this device.

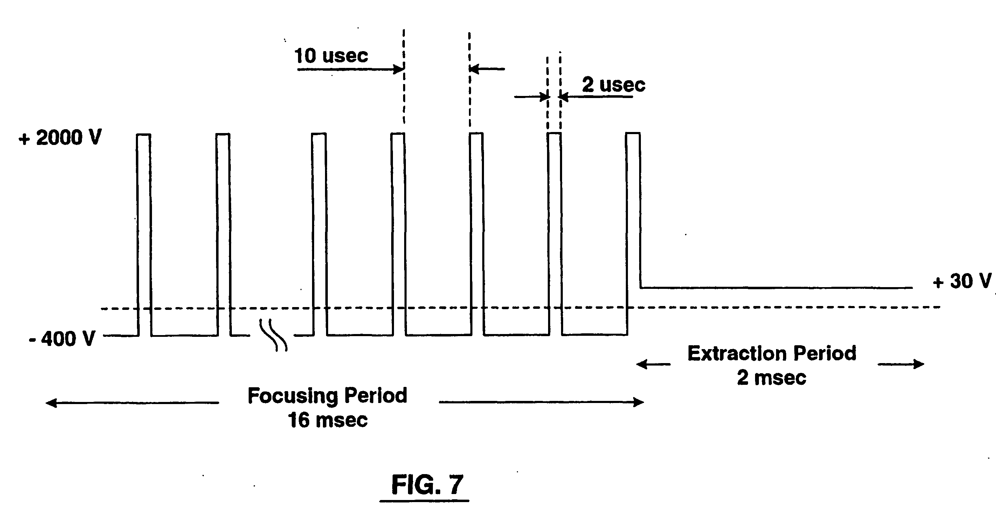

Now referring to Figure 7, the high voltage, high frequency asymmetric waveform V(t), applied to the FAIMS-R1-prototype of Figures 6A and 6B, is shown. The waveform is divided into two parts, the focussing period and the extraction period. The waveform was synthesized by an arbitrary waveform generator (e.g. Stanford Research Systems model DS340, not shown) and amplified by a pulse generator (e.g. Directed Energy Inc., model GRX-3.0K-H, not shown). The frequency of the waveform, and the relative duration of the high and low voltage portions of the waveform could easily be modified. Because of the high voltages, and steep rise-times of the square waves applied to this FAIMS-R1-prototype 30, the power consumption limits were severe, and waveforms in excess of about 1330 pulses (16 ms at 83,000 Hz) could not be delivered by this system without overheating electronic components of the high voltage pulse generator.

Note that, in the case of the FAIM5-R1-prototype 30, the high voltage, high frequency asymmetric waveform was applied to the outer cylinder 32 of the FAIMS-R1-prototype 30 shown in Figures 6A and 6B. Since all other forms of FAIMS discussed in this disclosure have the waveform applied to the inner tube or electrode, confusion may arise from the "polarity" of the waveform and the polarity of CV. In the FAIMS-R1-prototype 30 shown in Figures 6A and 6B, ions of type A (shown in Figure 1) are focussed during application of the opposite polarity waveform and CV than that shown for the devices in Figures 3A, 3B, 5A and 5B. Nevertheless, for simplification, the polarity will be written to be the same as if the device was constructed in the same way as those of the more conventional configuration. In other words the ions transmitted during application of waveform #1 will appear with DV positive and with CV negative. (Please note, however, that the actual voltages used on the device in Figures 6A and 6B are DV negative and CV positive).

As was observed in the conventional parallel plate FAIMS apparatus described earlier (Figure 2), the application of a high voltage asymmetric waveform V(t) will cause ions to migrate towards one of the FAIMS electrodes 2, 4 because of the changes in ion mobility at high electric fields (shown in Figures 1 and 2). This migration can be stopped by applying an electric field or compensation voltage CV in a direction to oppose the migration. For the FAIMS-R1-prototype 30 of Figures 6A and 6B, this CV was applied to the same electrode as the high voltage asymmetric waveform (i.e. the outer electrode 32), and was added to the waveform as a small dc bias (up to ± 50 V). At an appropriate combination of DV, and compensation voltage CV, a given ion will pass through the FAIMS device 30. The unit therefore acts like an ion filter. It is possible to fix conditions such that a single type of ion is isolated in the FAIMS analyzer 34 although a mixture of ions are presented to the inlet of the FAIMS analyzer region 34.

The second part of the waveform shown in Figure 7 (i.e. the extraction period) was used to pulse the ions out of the FAIMS analyzer region 34 between the outer electrode 32, and the inner shield electrode 33 (shown in Figures 6A and 6B). At the end of the focussing period, i.e. after 16 ms of waveform, the asymmetric waveform was replaced by a constant dc bias of approximately +30 V. This caused the ions from the annular space 34 between the outer electrode 32 and the inner shield electrode 33 to move in the direction of the inner shield electrode 33. A detector bias of -5 V, applied to innermost ion collector electrode 35, helped to carry the ions from the vicinity of the holes 38 in the inner shield electrode 33, through the holes 38 and into contact with the innermost ion collector electrode 35. The +30 V bias created an electric field of approximately 150 V/cm across the FAIMS analyzer region 34 and most ions located within this region 34 travelled across the 2 mm space in about 1 ms. The ion current due to the arrival of ions at the center inner shield electrode 33 can be predicted. For example, if only one type of ion, with mobility of 2.3 cm²/V-s, e.g., (H₂O)ₙH⁺ at ambient temperature and pressure conditions, was located in the FAIMS analyzer region 34, and if this ion was distributed evenly in the space, an approximately square-topped signal lasting approximately 0.6 ms should be observed. Deviation from this expected ion arrival profile would suggest that the ions were distributed in non-uniform profile across the FAIMS analyzer region 34 between the outer and inner cylinders of the FAIMS device 30.

Still referring to Figures 6A, 6B, and 7, the FAIMS-R1-prototype 30 was operated as follows. A 2L/min flow of purified air, Carrier Gas In (Cin), was passed into the cylinder 31 housing the ionization needle 15. Approximately 2000 V was applied to the needle 15, and the voltage was adjusted to produce a stable ionization current. The high voltage asymmetric waveform V(t) was applied to the outer FAIMS cylinder 32 for approximately 16 ms; this was followed by a 2 ms extraction pulse (Figure 7). The ion current striking the innermost ion collecting electrode 35 was detected and displayed on a digital oscilloscope 37. A measurement would typically consist of 100 averaged spectra, collected at a rate of approximately 5 Hz. Many experimental parameters were varied, including gas flow rates, the voltages of the asymmetric waveform V(t), the dc voltage applied to the outer electrode CV, and the extraction voltage.

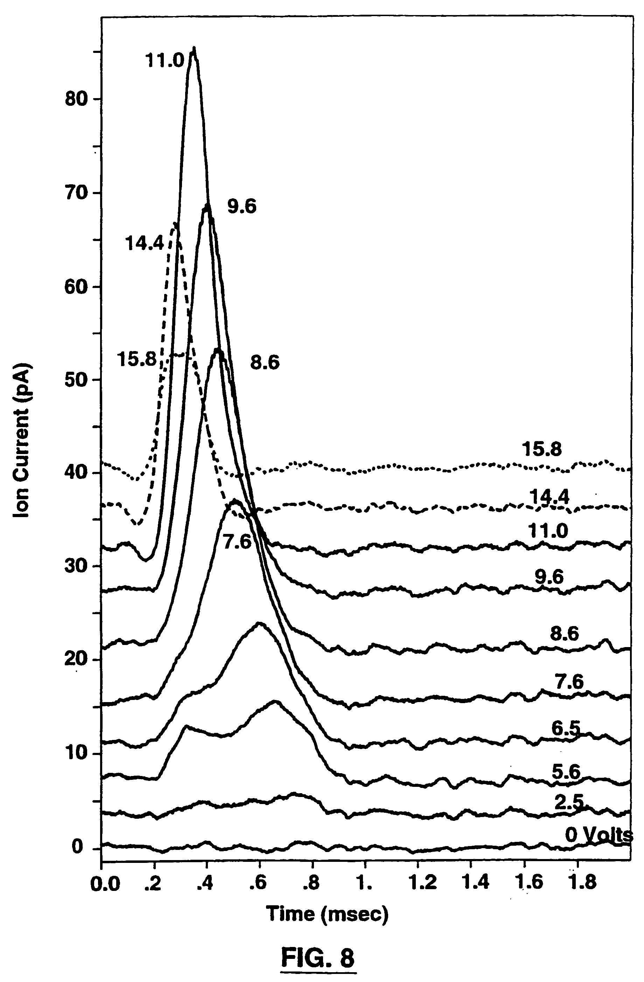

Figure 8 illustrates the ion arrival times at the innermost ion collector electrode 35 observed by conducting these experiments. Each trace was recorded with 2500 V applied DV, but with variable CV voltages. As can be seen, during application of DV and CV, the radial distribution of ions is not uniform across the annular space of the FAIMS analyzer region 34. For example, at CV near -11 V, the ions are focussed into a narrow band near the inner electrode 33, and therefore are detected as a high intensity pulse occurring very early after the extraction voltage has been applied. At low CV, for example at -5.6 V, the ions are much more uniformly distributed between the walls of the concentric cylinders 32 33 making up the FAIMS analyzer region 34. When no electrical voltages are applied to the cylinders 32, 33, the radial distribution of ions should be approximately uniform across the FAIMS analyzer region 34 (data for this no-voltage experimental condition is not shown in this document). The experimental data shown in Figure 8 is evidence that the ion focussing is indeed occurring in FAIMS instruments. This focussing results in the ions being focussed in a uniform "sheet" or band around the inner cylinder 33 within the FAIMS analyzer region 34. As mentioned previously, to the inventors' knowledge, this focussing effect has never been observed or explained previously.

### Modes of Operation of FAIMS

The focussing and trapping of ions by the use of asymmetric waveforms has been discussed above. For completeness, the behaviour of those ions which are not focussed within the FAIMS analyzer region will be described here. As explained earlier, the ions which do not have the high field ion mobility properties suitable for focussing under a given set of DV, CV and geometric conditions will drift toward one or another wall of the device, as shown in Figure 2. The rapidity with which they move to the wall depends on the degree to which their Kh/K ratio differs from that of the ion that might be focussed under the selected condition. At the very extreme, ions of completely the wrong property i.e. type A ion versus type C ion shown in Figure 1, will be lost to the walls very quickly.

The loss of ions should be considered one more way. If an ion of type A (Figure 1) is focussed at DV 2500 volts, CV -11 volts in a given geometry (for example, the FAIMS-E device of Figures 3A-3B), is it reasonable to expect that the ion will also be focussed if the polarity of DV and CV are reversed, i.e. DV of -2500 volts and CV of +11 volts (both applied to the inner electrode). It would seem that the reversal of polarity is a trivial exercise and the ion should be focussed, however, this is not observed. Instead, the reversal of polarity in this manner creates the mirror image effect of the ion focussing behaviour of FAIMS. The result of such polarity reversal is that the ions are not focussed, but rather are extremely rapidly rejected from the device, and collide with the walls of the cylinders 12, 13. The mirror image of a trapping valley, is a hill-shaped potential surface. The ions will slide to the center of the bottom of a trapping potential valley (2 or 3-dimensions), but will slide off of the top of a hill-shaped surface, and hit the wall of an electrode. This apparently anomalous behaviour is a consequence of the cylindrical geometry of the FAIMS-E.

This is the reason for the existence, in the FAIMS, of the independent "modes" called 1 and 2. In this disclosure, the FAIMS instrument is operated in four modes: P1, P2, N1, and N2. The "P" and "N" describe the ion polarity, positive (P) and negative (N). The waveform (Figure 4, wave #1) with positive DV (where DV describes the peak voltage of the high voltage portion of the asymmetric waveform) yields spectra of type P1 and N2, whereas the reversed polarity (Figure 4, wave #2, negative DV) waveform yields P2 and N1. The discussion thus far has considered positive ions but, in general, the same principles can be applied to the negative ions, as explained in the preliminary note to the Detailed Description.

### Separation Experiments

Based on the FAIMS principles discussed above and the experiments conducted by the inventors to demonstrate the concept of ion focussing, the inventors have developed what is believed to be a previously unknown method for separation of isotopes in the gaseous phase, at atmospheric pressure and room temperature. Ion separation experiments involving chlorine ions are provided by way of example.

### Chlorine Isotope Separation

Isotope tracer studies and internal standardization using enriched chlorine isotopes have gained widespread acceptance in both environmental and biomedical arenas. Dioxins and polychlorobiphenyls (PCB's) are two classes of environmental contaminants containing chlorine that have attracted intense scrutiny for a long time. Analysis procedures generally include liquid or solid phase extraction combined with gas chromatography using mass spectrometric detection. Inherent to all of these analytical procedures is the need for proper internal standardization to evaluate extraction efficiencies and ensure accurate quantitation at trace levels. Synthesis of isotopically labelled internal standards relies on the availability of a reliable source of high purity isotopes. Incorporation of such internal standards to routine analysis depends on the quality of analytical data required and the availability and cost of chemical standards.

Currently there are very few methods capable of chlorine isotope separation and/or enrichment at atmospheric pressure, even fewer (if any) are viable from an economic standpoint. A testament to this fact is the recent shutdown of a federally subsidized enriched isotope production laboratory in the United States. Unfavourable cost analysis, rather than a lack of demand was the apparent cause for the halt in production. Since the shutdown, the price of existing stocks of enriched chlorine isotopes and chlorine labelled compounds has risen dramatically.

Other studies in the prior art have reported isotopic fractionation using separation techniques such as liquid chromatography and capillary zone electrophoresis (CZE). It has been reported that near baseline separation of chloride isotopes has been achieved using CZE by carefully adjusting the electroosmotic flow to be equal but opposite to the electrophoretic migration of chloride ions. Despite the impressive results of these studies, it is unlikely that CZE will gain widespread use for isotope separation because of the degree of development of the method required, inherently poor reproducibility, transient nature of the analyte signal, and the poor specificity and selectivity of detection techniques generally associated with CZE. In short, the feasibility of isotope enrichment by CZE is not an issue due to the very low sample capacity.

The present invention was developed to address some of the limitations in the prior art identified above for separating and enriching isotopes. In the present example, the application of the method of the present invention to separate and enrich the isotopes of chlorine is shown and described. The method described is designed to separate and enrich isotopes without the need for expensive equipment, intensive method development, or complicated sample preparation.

Referring back to Figures 5A and 5B, an ESI-FAIMS interface was coupled to a PE Sciex API 300 triple quadrupole mass spectrometer. The outer cylinder 13 and the shorter inner cylinder 11 of the FAIMS instrument were held at the same electrical potential (e.g., 0 V). The longer inner cylinder 12 had the high frequency (210 kHz), high voltage (up to 4950 V p-p), asymmetric waveform (Fig. 4(b)) applied to it, thereby establishing the electric field between the long inner cylinder 12 and outer cylinder 13. In addition to this high frequency waveform, the CV was also applied to the long inner cylinder 12.

Still referring to Figures 5A and 5B, the electrospray needle 15 was placed on the centre axis of the shorter inner cylinder 11, terminating about 5 mm short of the gap 11A between the two inner cylinders 11, 12. The electrospray ions were driven radially outward by the electric field to the analyzer region 14 through the 5 mm gap 11A between the two inner cylinders 11, 12. For the generation of chloride ions, the electrospray needle 15 was held at -1950 V, giving a current of roughly -45 nA.

Gas connections to the FAIMS analyzer are also shown in Figure 5B. Compressed air was passed through a gas purification cylinder (charcoal/molecular sieve) and introduced into the FAIMS analyzer. Gas entered through the carrier in (Cᵢₙ) port, and exited via the carrier out (Cₒᵤₜ) and sample out (Sₒᵤₜ) ports. For the experiments, the gas was introduced through Cᵢₙ at a flow rate of 5 L/min. The gas exited through Sₒᵤₜ at 1 L/min and through Cₒᵤₜ at 4 L/min. A fraction of Cᵢₙ, directed radially inward through the 5 mm gap 11A between the inner cylinders 11, 12 acted as a curtain gas. While the ions formed by ESI were driven radially outward through the gap 11A by the electric field, the curtain gas prevented neutrals from entering the analyzer region 14. The curtain gas portion of Cᵢₙ, along with the neutrals, exited the FAIMS analyzer via the Sₒᵤₜ port. The remainder of the gas flow carried the electrospray ions along the length of the analyzer region 14 between the outer cylinder 13 and the long inner cylinder 12.

If the combination of DV and CV were appropriate, ions were transferred to the vacuum chamber of the mass spectrometer (FAIMS-MS) through the orifice 19 of the sampler cone 18. The diameter of the orifice 19 in the sampler cone 18 was approximately 270 µm. The orifice 19 was electrically insulated from the FAIMS analyzer and a separate voltage (OR) of -24 V was applied to it. An offset voltage of -49 V was applied to the entire FAIMS analyzer (V_{FAIMS}) to enhance the sensitivity of the FAIMS-MS 20. The skimmer cone was held at ground potential and the small ring electrode normally located behind the orifice 19 (not shown) was not incorporated into the present interface, resulting in a significant loss of sensitivity for the low mass chloride ions. The pressure inside the FAIMS analyzer was kept at roughly 770 torr.

A 1 mL stock solution containing 0.0097 grams of reagent grade ammonium chloride (MW 53.49, Anachemia) was prepared in HPLC grade methanol (Anachemia). A 2 µL aliquot of this stock solution was then diluted in 2 mL of methanolic ESI buffer containing 15 µM ethylenediaminetetraacetic acid (EDTA), (MW 292.25, Fisher Scientific) to give a sample solution containing 180 µM of chloride. An EDTA based electrospray buffer was chosen to improve the yield of free chloride ions in the gas phase. This is accomplished by preferentially binding most metal ions, Mⁿ⁺, thus preventing the formation of various metal-chloride species in solution, MClₙ⁻.

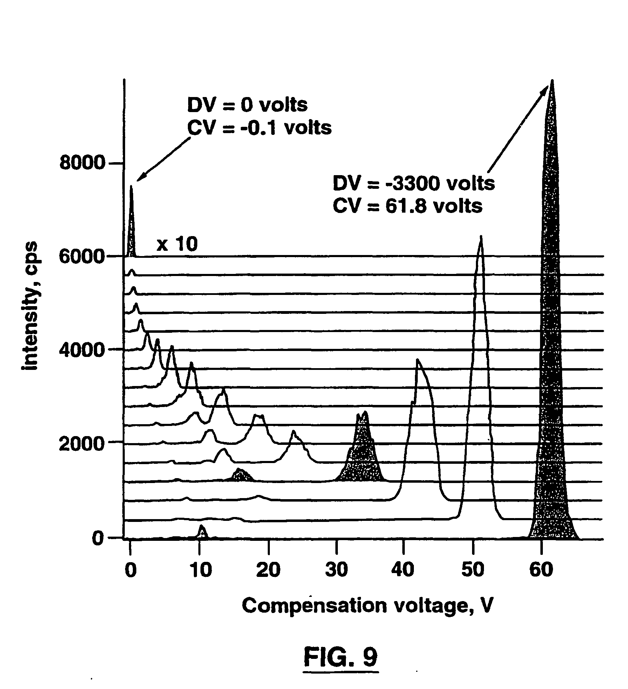

Now referring to Figure 9, the capability of the FAIMS analyzer to transmit (with focusing) chloride ions generated from an ESI source is demonstrated. Each trace in Figure 9 represents an ion-selected CV spectrum (IS-CV spectrum), collected at regular intervals of DV by scanning the CV from -1 to 69 volts, while monitoring a mass to charge ratio (m/z) of -35. The dwell time and number of scans were kept constant for each spectrum. The plot consists of a total of 16 IS-CV spectra, the first spectrum (top trace) was acquired with a dispersion voltage, DV, of 0 volts (i.e. FAIMS was "disabled"). The signal intensity has been multiplied by a factor of 10 for presentation purposes. The next IS-CV spectrum was acquired at DV = -500 V, and subsequent spectra acquired after increasing the magnitude of DV by 200 V to a maximum of -3000 V. The final spectrum in the series was acquired at DV = -3300 volts. From this series of spectra, there are four things to note as the magnitude of DV is increased: (1) the peaks shift to higher compensation voltages; (2) the peak widths vary; (3) the ion current separates into several IS-CV peaks; and (4) the total ion current increases substantially. Three of the spectra included in Figure 9 (DV = 0, -2700, and -3300 volts) have been flagged for further discussion by shading to baseline.

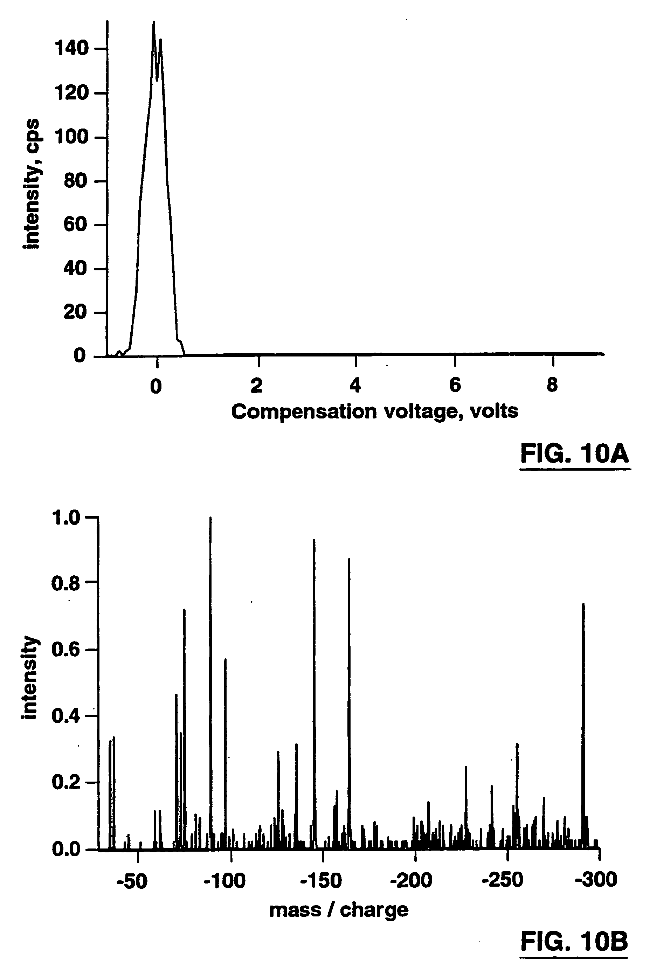

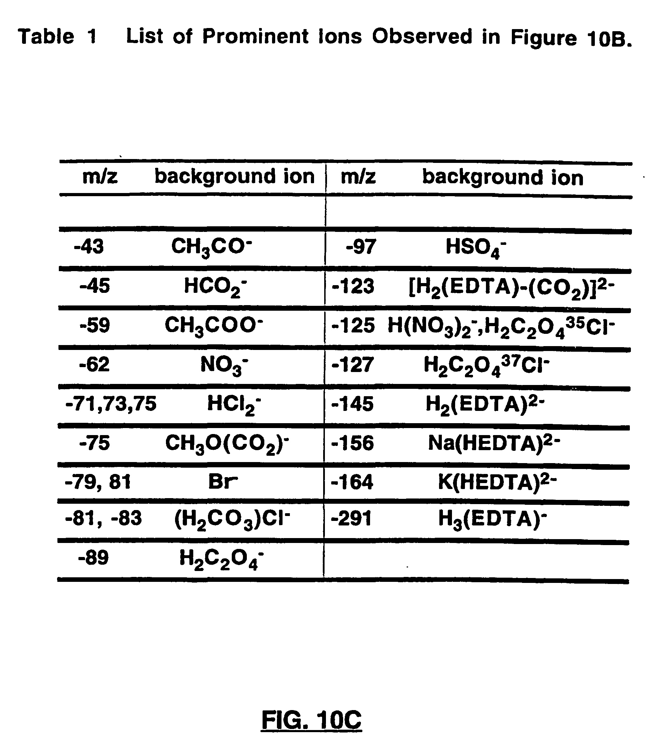

Now referring to Figure 10A, the IS-CV spectrum acquired at DV = 0 volts (i.e. with FAIMS disabled) is shown. Since there is no applied electric field, there is no net ion motion toward either electrode within the FAIMS analyzer so the peak appears at CV - 0 volts. A mass spectrum acquired by setting CV = 0 volts is shown in Figure 10B. Most of the major ions in the spectrum are easily identifiable, a detailed list is given in Table 1 (Figure 10C). Note that most of the ions above m/z -140 are related to EDTA. This ESI-FAIMS-MS spectrum with FAIMS disabled is very similar to a conventional ESI-MS spectrum.

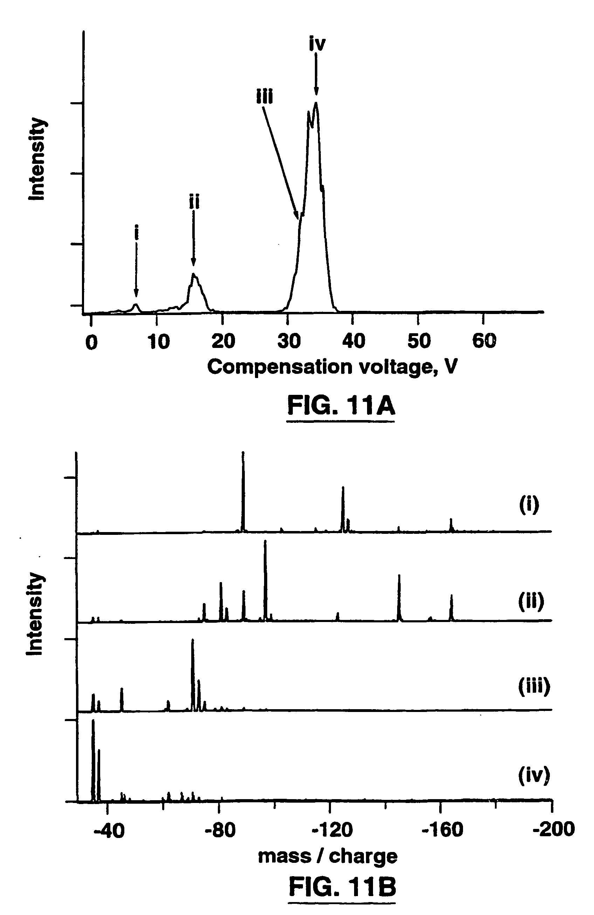

Now referring to Figure 11A, the IS-CV spectrum acquired at DV = -2700 volts is shown. From the IS-CV spectra, it is observed that three distinct ions or chemical entities are transmitted through the FAIMS analyzer and yield an ion of m/z -35. Based on earlier studies conducted by the inventors, it was expected that one of the peaks would correspond to free chloride ion while the others represent adducts that dissociate via collision induced dissociation in the FAIMS-MS interface to yield bare chloride ion. Identification of the source of these peaks was undertaken by sequentially tuning the CV to each IS-CV peak maximum and collecting mass spectra. Mass spectra collected at the same MS conditions as used for the IS-CV spectrum in Figure 11A are shown in Figure 11B, traces (i) through (iv). Given the resolution of FAIMS, some mass spectral overlap is inevitable; therefore, not all ions in the MS scans of Figure 11B are related to chloride. The majority of the ions identified from the spectrum in Figure 10B and listed in Table 1 (Figure 10C) will appear at some value of CV between 0 and 40 volts with DV = -2700 V. All four mass spectra in Figure 11B show the presence of some ³⁵Cl⁻ ion. The first three spectra, Figure 11B traces (i) to (iii), also exhibit characteristic chloride isotope patterns at higher masses. In Figure 11B trace (i), CV = 6.7 volts, a chloride adduct to oxalic acid (H₂C₂O₄) is identified at m/z -125 and -127. Note that in addition to the chloride related species transmitted at CV = 6.7 volts, other chemical species also appear in the mass spectrum because they have similar Kₕ/K properties, such species include K(HEDTA)²⁻ at m/z -164. The oxalate ion (m/z -89) in this spectrum is formed from the dissociation of the chloride/oxalic acid adduct species. In Figure 11B trace (ii), CV = 15.5 volts, another adduct of chloride is identified, in this case chloride is associated with formic acid (H₂CO₂). Figure 11B trace (iii) was collected on the shoulder of the major peak in Figure 11A, CV = 32.0 volts. In this case, a species containing two chloride ions is identified as a hydrochloric acid adduct, HCl₂⁻ (m/z -71). Finally, collection of a mass spectrum at the maximum of the peak at CV = 34.5 volts, yields a spectrum that indicates the presence of free chloride ion (Figure 11B trace (iv)). There are several other ions with similar Kₕ/K behaviour as chloride at DV = -2700 volts, including nitrite (NO₂⁻) and nitrate (NO₃⁻), hence they also appear in the mass spectrum. In addition, there are peaks in this spectrum relating to solvated chloride species, i.e. Cl(H₂O)⁻ (m/z -53) and Cl(CH₃OH)⁻ (m/z -67). These solvated species are likely a post-FAIMS phenomenon, generated by the recombination of chloride with solvent vapour, within the jet expansion region of the mass spectrometer.

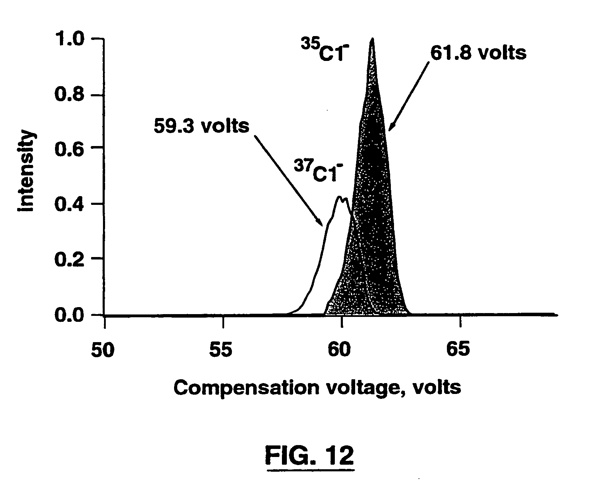

Next, Figure 12 shows the final IS-CV spectrum flagged from Figure 9 (at DV = -3300 volts) and plotted over a CV range of 50 to 69 volts. The ³⁷Cl isotope is included in this figure to demonstrate the capability of FAIMS for the separation of isotopes. There are some points to be emphasised pertaining to the results in Figure 12. First, it is seen that the heavier chlorine isotope, ³⁷Cl, appears at lower compensation voltage. This is consistent with the inventors' previous findings for type A ions (low mass, increasing mobility with electric field) that CV is inversely dependent on ion mass within series of ions with homologous structures. Secondly, the accuracy of the isotope ratio determined from this figure appears to be relatively poor. However, it is speculated that this is a post FAIMS effect brought about in the MS. Third, the two CV peaks are not symmetric, and in fact there appears to be some "tailing" for both ions to the low CV side. This peak asymmetry appears to be an artifact of the 45 degree ion extraction from FAIMS into the mass spectrometer used in this experiment. Finally, comparison of the measured ion current between the first (DV = 0 volts) and last (DV = -3300 volts) yields a 75-fold increase in sensitivity as a result of a two-dimensional ion focusing mechanism that occurs within the FAIMS analyzer.

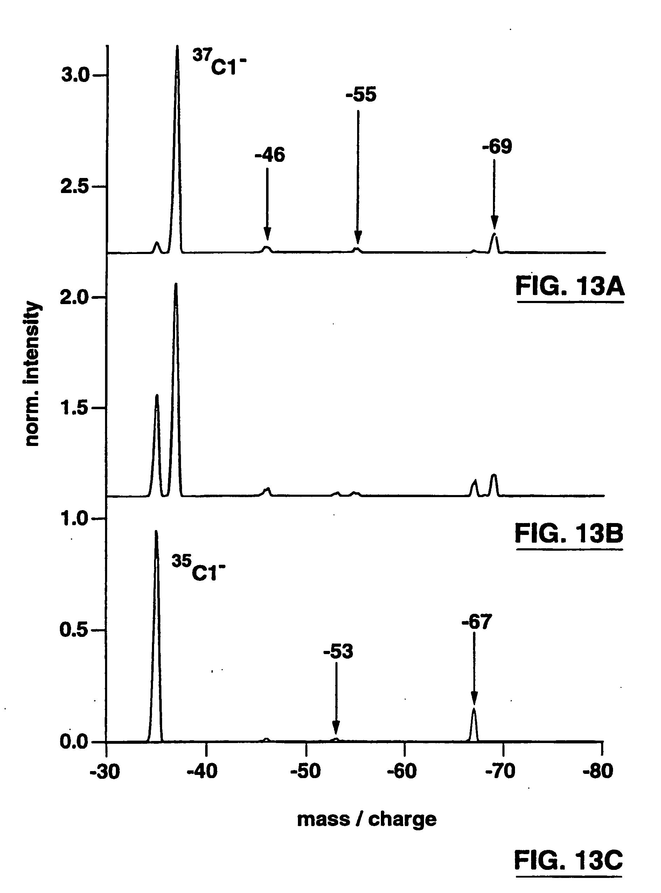

Finally, referring to Figures 13A-13C, mass spectra collected at CV values of 59.3, 60.0 and 61.8 volts respectively, with DV held constant at -3300 volts are shown. From these spectra, it is shown that the FAIMS analyzer is able to separate the two isotopes on a continuous basis. In addition to the bare chloride ions at m/z values of -35 and -37, the spectra also contain signal from nitrite anion (m/z -46) and two solvated chloride species, Cl(H₂O)⁻ and Cl(CH₃OH)⁻, at m/z values of -53, -55, -67 and -69.

Although the invention has been described and illustrated with reference to specific embodiments, those skilled in the art will recognize that the invention may be otherwise embodied within the scope of the following claims. Specifically, while the use of a mass spectrometer for measuring ions transmitted through a FAIMS analyzer is shown and described, it will be understood that a mass spectrometer is not required in order for separation of isotopes to occur. Once the operating conditions for the FAIMS analyzer have been established, the desired isotopes being transmitted through the FAIMS analyzer may be collected rather than being passed into a mass spectrometer for further analysis.

## Claims

1. A method for separating and enriching ions of differing isotopic composition, comprising the steps of:
a) providing at least one ionization source of ions;
b) providing an analyzer region defined by a space between at least first and second spaced apart electrodes, said analyzer region being in communication with a gas inlet, a gas outlet, an ion inlet and an ion outlet, and introducing said ions into said analyzer region through said ion inlet;
c) applying an asymmetric waveform voltage and a direct current compensation voltage to at least one of said electrodes;
d) setting said asymmetric waveform voltage; and
e) setting said direct current compensation voltage to a determined value to separate and enrich a desired isotopic ion.

2. The method claimed in claim 1, which includes operating substantially at atmospheric pressure and substantially at room temperature.

3. The method claimed in claim 1 or 2, wherein, said ions introduced into said ion inlet are produced by electrospray ionization.

4. The method claimed in any of claims 1-3, which includes detecting said transmitted ions by mass spectrometry.

5. The method claimed in claim 4, which includes subjecting the transmitted ions to a mass analysis scan to provide ion intensity data over a selected range of mass to charge ratios.

6. The method claimed in any preceding claim, which includes providing a gas flow (6,C_{IN}) through said analyzer region (5,14,34), so as to transport said ions along said analyzer region.

7. The method claimed in any preceding claim, which includes collecting said one of said ions of differing isotopic composition for further processing.

8. The method claimed in claim 1 or 3, including the additional steps prior to step e) of:
d1) varying said direct current compensation voltage and measuring resulting transmitted ions at said ion outlet (16), so as to produce a compensation voltage scan for said transmitted ions;
d2) identifying peaks in said compensation voltage scan corresponding to said desired isotopic ions; and
d3) determining an appropriate direct current compensation voltage corresponding to one of said peaks, so as to separate and enrich a desired isotopic ion.

## Patentansprüche

1. Verfahren zum Absondern und Anreichern von Ionen verschiedener Isotopenzusammensetzungen, beinhalten die Schritte:
a) zur-Verfügung-Stellen mindestens einer Ionisierungsquelle von Ionen;
b) zur-Verfügung-Stellen eines Analysatorbereichs, welcher durch einen Raum zwischen mindestens ersten und zweiten voneinander beabstandeten Elektroden definiert ist, wobei der Analysatorbereich mit einem Gaseinlass, einem Gasauslass, einem Ioneneinlass und einem Ionenauslass in Verbindung steht, und Einbringen der genannten Ionen in den genannten Analysatorbereich durch den genannten Ioneneinlass;
c) Beaufschlagen mindestens einer der genannten Elektroden mit einer asymmetrischen Wellenformspannung und einer Direktstrom-Kompensationsspannung;
d) Eistellen der genannten asymmetrischen Wellenformspannung; und
e) Einstellen der genannten Direktstrom-Kompensationsspannung auf einen festen Wert um ein gewünschtes isotopisches Ion abzusondern und anzureichern.

2. Verfahren nach Anspruch 1, wobei im Wesentlichen bei Athmosphärendruck und im Wesentlichen bei Raumtemperatur gearbeitet wird.

3. Verfahren nach Anspruch 1 oder 2, wobei die genannten Ionen, die in den genannten Ioneneinlass eingebracht werden, durch Elektrospray-Ionisierung erzeugt werden.

4. Verfahren nach einem der Ansprüche 1 bis 3, wobei die genannten transmittierten Ionen durch Massenspektrometrie detektiert werden.

5. Verfahren nach Anspruch 4, wobei die transmittierten Ionen einem Massenanalyse-Scan unterworfen werden, um Intensitätsdaten über einen ausgewählten Bereich von Masse-zu-Ladung-Verhältnissen zu erhalten.

6. Verfahren gemäss einem der vorangehenden Ansprüche, wobei ein Gasfluss (6, C_{IN}) durch den genannten Analysatorbereich (5, 14, 34) erzeugt wird, wodurch die genannten Ionen dem genannten Analysatorbereich entlang transportiert werden.

7. Verfahren nach einem der vorangehenden Ansprüche, wobei die genannten einen isotopischen Ionen der genannten Ionen verschiedener Isotopenzusammensetzungen für die weitere Verarbeitung gesammelt werden.

8. Verfahren gemäss Anspruch 1 oder 3, wobei vor dem Schritt e) folgende Schritte ausgeführt werden:
d1) Variieren der genannten Direktstrom-Kompensationsspannung und Messen der transmittierten Ionen bei dem genannten Ionenauslass (16), wodurch ein Kompensationsspannungs-Scan für die transmittierten Ionen erzeugt wird:
d2) Identifizieren von Peaks im genannten Kompensationsspannungs-Scan, welche Peaks den gewünschten isotopischen Ionen entsprechen; und
d3) Festlegen einer geeigneten Direktstrom-Kompensationsspannung entsprechend einem der genannten Peaks, um ein gewünschtes isotopisches Ion abzusondern und anzureichern.

## Revendications

1. Procédé de séparation et d'enrichissement d'ions de différentes compositions isotopiques, qui comprend les étapes qui consistent à :
a) prévoir au moins une source d'ionisation d'ions,
b) prévoir une région d'analyse définie par un espace situé entre au moins une première et une deuxième électrode situées à distance l'une de l'autre, ladite région d'analyse communiquant avec un orifice d'addition de gaz, un orifice de sortie de gaz, un orifice d'admission d'ions et un orifice de sortie d'ions, et introduire lesdits ions dans ladite région d'analyse par ledit orifice d'addition d'ions,
c) sur au moins l'une desdites électrodes, appliquer une tension dont la forme d'onde est asymétrique et une tension continue de compensation,
d) fixer ladite tension de forme d'onde asymétrique et
e) fixer ladite tension continue de compensation à une valeur déterminée en vue de séparer et d'enrichir un ion isotopique voulu.

2. Procédé selon la revendication 1, qui comprend un travail à pression essentiellement atmosphérique et à température essentiellement ambiante.

3. Procédé selon les revendications 1 ou 2, dans lesquelles lesdits ions introduits dans ledit orifice d'admission d'ions sont produits par ionisation par électropulvérisation.

4. Procédé selon l'une quelconque des revendications 1 à 3, qui comprend l'étape qui consiste à détecter lesdits ions émis par spectrométrie de masse.

5. Procédé selon la revendication 4, qui comprend l'étape qui consiste à faire subir aux ions émis un balayage d'analyse de masse en vue de délivrer des données d'intensité ionique dans une plage sélectionnée de rapports de la masse à la charge.

6. Procédé selon l'une quelconque des revendications précédentes, qui comprend l'étape qui consiste à assurer un écoulement de gaz (6) dans ladite région d'analyse (5, 14, 34) de manière à transporter lesdits ions le long de ladite région d'analyse.

7. Procédé selon l'une quelconque des revendications précédentes, qui comprend l'étape qui consiste à recueillir l'un desdits ions de compositions isotopiques différentes en vue de la poursuite de son traitement.

8. Procédé selon les revendications 1 ou 3, qui comprend, avant l'étape e), les étapes supplémentaires qui consistent à :
d1) faire varier ladite tension continue de compensation et mesurer les ions émis ainsi obtenus sur ledit orifice (16) de sortie d'ions de manière à produire un balayage de tension de compensation pour lesdits ions émis,
d2) détecter les pics desdits balayages de tension de compensation qui correspondent auxdits ions isotopiques voulus et
d3) déterminer la tension continue de compensation qui correspond à l'un desdits pics et qui convient pour séparer et enrichir les ions isotopiques voulus.
